# EUROPÄISCHE PATENTSCHRIFT

(11) **EP 0 756 686 B1**
(45) Veröffentlichungstag und Bekanntmachung des Hinweises auf die Patenterteilung: **05.12.2001**
(21) Anmeldenummer: 95906975.8
(22) Anmeldetag: 19.01.1995
(51) Int. Cl.: F16L 41/08, F16L 37/00

(54) **VAKUUMDICHTE VERBINDUNG**
VACUUMTIGHT CONNECTION
ASSEMBLAGE ETANCHE AU VIDE

(30) Priorität: 19.04.1994 DE 4413488
(43) Veröffentlichungstag der Anmeldung: 05.02.1997
(73) Patentinhaber: LEYBOLD AKTIENGESELLSCHAFT, 50968 Köln (DE)
(72) Erfinder: SCHULZ-HAUSMANN, Friedrich, D-53229 Bonn (DE); WALTER, Wilhelm, D-50169 Kerpen (DE); FISCHER, Hans-Rudolf, D-50374 Erftstadt (DE); ENGLÄNDER, Heinrich, D-52441 Linnich (DE)
(74) Vertreter: Leineweber, Jürgen, Dipl.-Phys.
(86) Internationale Anmeldenummer: EP9500188
(87) Internationale Veröffentlichungsnummer: WO9528596

(56) Entgegenhaltungen:
- EP-A- 0 521 776
- DE-A- 3 810 385
- GB-A- 2 108 617

## Beschreibung

Die Erfindung betrifft ein Gehäuse eines Gerätes, einer Pumpe oder dergleichen mit einer Vakuum-Verbindung, die einen im Gehäuse befindlichen Kanal mit einer äußeren Leitung verbindet und die gehäuseseitig eine die Mündung des Kanals umgebende Dichtfläche, leitungsseitig einen Flansch mit einer korrespondierenden Dichtfläche sowie Verbindungsbauteile umfasst.

Es ist bekannt, zur vakuumdichten Verbindung von Geräten, Pumpen oder dergleichen mit zu- oder weiterführenden Leitungen Flanschbauteile einzusetzen (vgl. DE-A-24 16 808). Am Ort der Mündung des in der Gehäuseoberfläche endenden Kanals ist üblicherweise ein Anschluss-stutzen mit einem Flansch vorgesehen. Auch die mit dem Anschlussstutzen zu verbindende Leitung weist einen Flansch auf. Die Herstellung der Verbindung selbst erfolgt dadurch, dass die beiden Flansche aufeinandergesetzt und mit Hilfe eines Spannrings oder anderen Flanschverbindungsbauteilen in dieser Stellung fixiert werden. In aller Regel sind bei vakuumdichten Verbindungen dieser Art Dichtringe aus Kunststoff, Gummi oder auch Metall vorgesehen. Diese befinden sich zwischen den jeweiligen Dichtflächen. Mit Hilfe von Nuten, Zentrierringen oder dergleichen werden sie in ihrer Soll-Lage gehalten.

Aus dem Gehäuse einer Pumpe, eines Gerätes oder dergleichen hervorragende Anschlussstutzen vergrößern deren Bauvolumen. Die Beschädigungsgefahr der an den hervorragenden Flanschen befindlichen Dichtflächen ist hoch. Schließlich ist auch der Platzbedarf, der notwendig ist, um die Flanschverbindung herzustellen, hoch, da beide Hände notwendig sind, um einen Spannring oder andere Flanschverbindungsbauteile aufzusetzen und zu befestigen.

Die DE-A-38 10 385 offenbart eine Einrichtung zum axialen Sichern von Schlauchstecknippeln oder einsteckbaren Leitungsenden. Dazu wird eine Drehschieberplatte (5, 5') verwendet, die in einer Ebene verdrehbar ist, die parallel zur Oberfläche des Gehäuses liegt. Bei dieser Drehbewegung können Kräfte in einer zur Drehbewegung senkrechten Richtung nicht erzeugt werden.

Der vorliegenden Erfindung liegt die Aufgabe zugrunde, die Anschlussgeometrie einer Vakuum-Verbindung zwischen dem Gehäuse eines Gerätes, einer Pumpe oder dergleichen und einer Leitung kompakter und anwenderfreundlicher zu gestalten.

Erfindungsgemäß wird diese Aufgabe dadurch gelöst, dass sich die die gehäuseseitige Mündung des Kanals umgebende Dichtfläche im Bereich der Gehäuseoberfläche befindet, dass der vakuumdichten Befestigung des Flansches der äußeren Leitung auf der Dichtfläche ein Halteblech dient, das bei hergestellter Verbindung dem dem Gehäuse abgewandten Rand des Flansches aufliegt, dass mit Hilfe des Haltebleches Anpresskräfte erzeugt werden, die die Dichtfläche des Flansches gegen die Dichtfläche im Bereich der Gehäuseoberfläche pressen, dass das Halteblech mit Durchbrechungen für den Durchgriff der Schäfte von Befestigungsschrauben oder ähnlichem ausgerüstet ist, deren Köpfe dem Halteblech bei hergestellter Verbindung aufliegen, und dass mindestens eine der Befestigungsschrauben der Erzeugung der Anpresskräfte dient.

Weitere Vorteile und Einzelheiten der Erfindung sollen anhand von in den Figuren 1 bis 8 dargestellten Ausführungsbeispielen erläutert werden. Es zeigen
- Figur 1 eine erfindungsgemäße Verbindung mit in der Ebene der Gehäuseoberfläche liegender Dichtfläche,
- Figur 2 eine Draufsicht auf ein Halteblech,
- Figuren 3 und 4 Verbindungen nach der Erfindung mit in einer Vertiefung der Gehäuseoberfläche liegender Dichtfläche und
- Figuren 5 bis 8 eine Ausführungsform mit verschiedenen Stellungen der miteinander zu verbindenden Bauteile.

In den Figuren sind die
- erfindungsgemäß gestalteten Verbindungen jeweils mit 1,
- das Gehäuse eines Gerätes, einer Pumpe o. dgl. mit 2,
- der innere, in die Gehäuseoberfläche mündende Kanal mit 3,
- die Mündung des Kanals 3 mit 4,
- die gehäuseseitige, die Kanalmündung 4 umgebende Dichtfläche mit 5,
- die äußere, mit dem Kanal 3 zu verbindende Leitung mit 6,
- der Flansch dieser Leitung 6 mit 7,
- die Dichtfläche des Flansches 7 mit 8,
- ein zwischen den Dichtflächen 5 und 8 befindlicher Dichtring mit 9,
- das den Flansch 7 in seiner Verbindungsposition fixierende Halteblech mit 10 und
- die Achse der Anschlußgeometrie mit 11 bezeichnet.

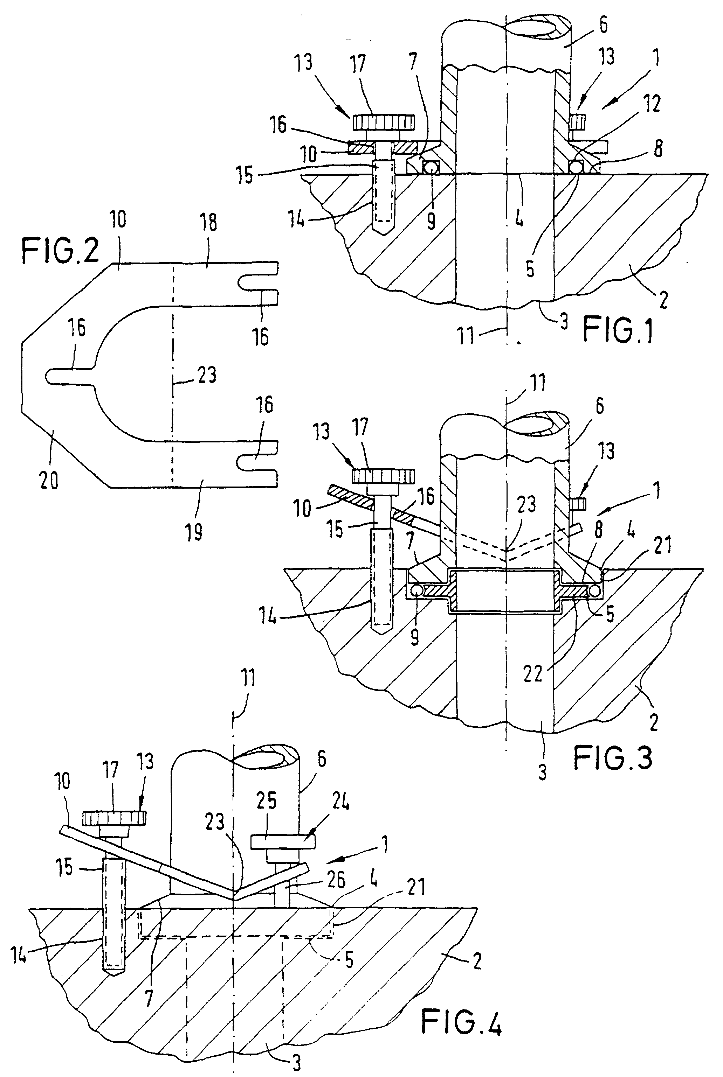

Beim Ausführungsbeispiel nach Figur 1 liegt die sich senkrecht zur Achse 11 erstreckende gehäuseseitige Dichtfläche 5 in der Ebene der Oberfläche des Gehäuses 2. Zur Fixierung des Dichtringes 9 ist der Flansch 7 der Leitung 6 mit einer stirnseitigen Nut 12 ausgerüstet. Diese Nut könnte sich auch auf der Gehäuseoberfläche befinden. Das eben und U-förmig gestaltete Halteblech 10 liegt dem Rand des Flansches 7 von außen auf. Es wird mit Hilfe von drei Schrauben 13 auf dem Gehäuse befestigt. Dazu sind im Gehäuse 2 Gewindebohrungen 14 vorgesehen. Die Schäfte 15 der Schrauben 13 durchdringen Durchbrechungen 16 im Halteblech 10. Die Köpfe 17 der Schrauben 13 liegen dem Halteblech 10 auf.

Figur 2 zeigt, daß das Halteblech 10 etwa U-förmig gestaltet ist und damit zwei Längsabschnitte 18, 19 und einen Verbindungsabschnitt 20 aufweist. Der Abstand der Längsabschnitte 18, 19 voneinander ist etwas größer als der Außendurchmesser der Leitung 6. Die Durchbrechungen 16 dieses Ausführungsbeispieles sind schlitzförmig gestaltet. Alle Schlitze 16 sind gleichgerichtet und erstrecken sich etwa parallel zu den Längsabschnitten 18, 19. Dadurch ist es möglich, durch eine Bewegung des einzigen Losteils, des Halteblechs 10, etwa quer zur Achse 11 des Systems alle Schäfte 15 der Schrauben 13 in die Schlitze 16 einzuführen. Bei gleichmäßiger Anordnung der Schrauben 13 kann dieses von drei Seiten her geschehen, so daß die Zugänglichkeit zur Verbindung in beengten Einbausituationen verbessert ist. Zur Herstellung einer vakuumdichten Verbindung ist es dann noch erforderlich, die bei der vorangegangenen Lösung der Verbindung nur gelockerten Schrauben wieder anzuziehen. Dieses kann einfach und relativ schnell manuell durchgeführt werden. Dazu sind die Schraubenköpfe 17 mit einer Rändelung ausgerüstet. Sind höhere Anpreßkräfte erwünscht, müssen die Schraubenköpfe 17 so ausgebildet sein, daß sie den Ansatz von Schlüsseln ermöglichen.

Beim Ausführungsbeispiel nach Figur 3 befindet sich die gehäuseseitige Dichtfläche 5 in einer in die Gehäuseoberfläche eingelassenen Vertiefung 21. Der Fixierung des Dichtrings 9 dient ein an sich bekannter Zentrierring 22, der dem Dichtring 9 von innen anliegt. Ein weiterer Unterschied gegenüber dem Ausführungsbeispiel nach Figur 1 besteht darin, daß das Halteblech 10 derart im Bereich seiner Auflage auf dem Rand des Flansches 7 abgeknickt ist, daß die mit den Durchbrechungen 16 ausgerüsteten Abschnitte 18, 19, 20 derart geneigt sind, daß sich zumindest der längere während der Verschraubung wirksame Hebelarm vom Gehäuse 2 weg erstreckt. Das für die Anpreßkraft maßgebende Hebelverhältnis wird dadurch verbessert. Die Knicklinie ist - auch in Figur 2 - mit 23 bezeichnet.

Figur 4 läßt erkennen, daß nicht alle Stützpunkte für das Halteblech 10 als Schrauben 13 ausgeführt sein müssen. Bei einer Ausführungsform des Halteblechs gemäß Figur 2 reicht es aus, wenn nur eine Schraube 13 vorhanden ist. Die weiteren Stützpunkte 24 können gehäusefest ausgeführt sein. Stützpunkte 24 dieser Art können Winkel, Quernuten oder- wie dargestellt - Schäfte 26 mit Köpfen 25 sein, gegen die sich das Halteblech 10 von der Gehäuseseite her abstützt, wenn die Schraube 13 angezogen wird. Eine sichere Einhandmontage ist dadurch möglich.

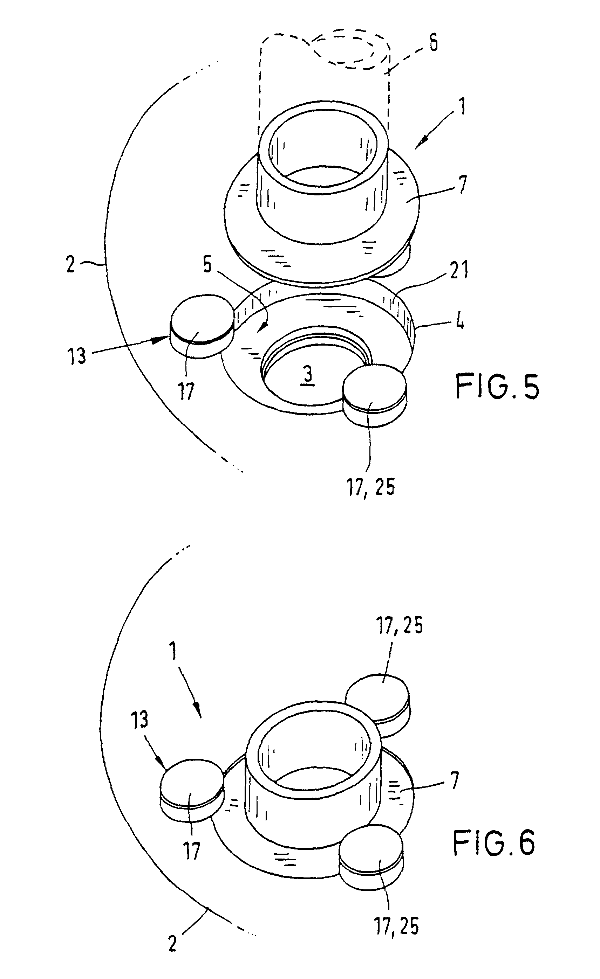

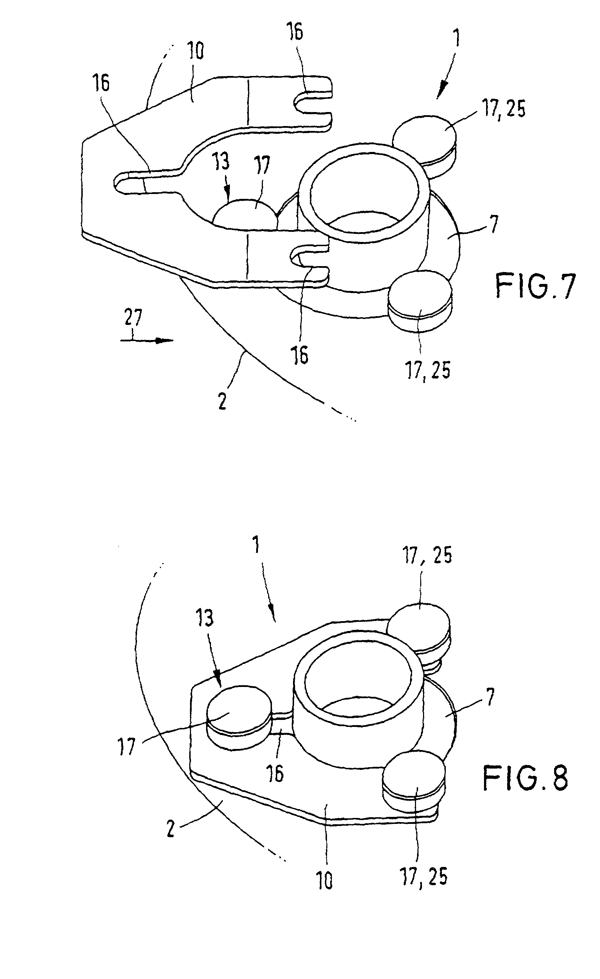

Die Figuren 5 bis 8 zeigen ein Ausführungsbeispiel in verschiedenen Phasen der Herstellung einer vakuumdichten Verbindung. Zunächst wird der Flansch 7 der Leitung 6- zusammen mit einem nicht dargestellten Dichtring/Zentrierring - in die Vertiefung 4 eingesetzt (Figuren 5 und 6). Das mit gleichgerichteten Schlitzen als Durchbrechungen 16 ausgerüstete Halteblech 10 wird durch eine seitliche Bewegung (Pfeil 27 in Figur 7) derart unterhalb die Köpfe 17 bzw. 25 geschoben, daß sich die nicht sichtbaren Schäfte 15 bzw. 26 in die Schlitze 16 eindringen. Durch Anziehen der Schrauben wird die vakuumdichte Verbindung hergestellt (Figur 8). Bei drei Schrauben ermöglicht das Festziehen nur einer Schraube 13 die Aufbringung der erforderlichen Anpreßkraft. Die beiden anderen Köpfe 25 können deshalb Bestandteile gehäusefester Stützpunkte sein.

## Patentansprüche

1. Gehäuse (2) eines Gerätes, einer Pumpe oder dergleichen mit einer Vakuum-Verbindung, die einen im Gehäuse (2) befindlichen Kanal (3) mit einer äußeren Leitung (6) verbindet und die gehäuseseitig eine die Mündung (4) des Kanals (3) umgebende Dichtfläche (5), leitungsseitig einen Flansch (7) mit einer korrespondierenden Dichtfläche (8) sowie Verbindungsbauteile (10, 13, 24) umfasst,
**dadurch gekennzeichnet, dass**
sich die die gehäuseseitige Mündung (4) des Kanals (3) umgebende Dichtfläche (5) im Bereich der Gehäuseoberfläche befindet, dass der vakuumdichten Befestigung des Flansches (7) der äußeren Leitung (6) auf der Dichtfläche (5) ein Halteblech (10) dient, das bei hergestellter Verbindung dem dem Gehäuse (2) abgewandten Rand des Flansches (7) aufliegt, dass mit Hilfe des Haltebleches (10) Anpresskräfte erzeugt werden, die die Dichtfläche (8) des Flansches (7) gegen die Dichtfläche (5) im Bereich der Gehäuseoberfläche pressen, dass das Halteblech (10) mit Durchbrechungen (16) für den Durchgriff der Schäfte (15, 26) von Befestigungsschrauben (13) oder ähnlichem (24) ausgerüstet ist, deren Köpfe (17, 25) dem Halteblech (10) bei hergestellter Verbindung aufliegen, und dass mindestens eine der Befestigungsschrauben (13) der Erzeugung der Anpresskräfte dient.

2. Gehäuse nach Anspruch 1, **dadurch gekennzeichnet, dass** sich die gehäuseseitige Dichtfläche (5) in einer Vertiefung (21) in der Gehäuseoberfläche befindet.

3. Gehäuse nach Anspruch 1 oder 2, **dadurch gekennzeichnet, dass** sich die Dichtflächen (5, 8) etwa senkrecht zur Achse (11) der Anschlussgeometrie erstrecken.

4. Gehäuse nach Anspruch 1, 2 oder 3, **dadurch gekennzeichnet, dass** das Halteblech (10) etwa U-förmig gestaltet ist.

5. Gehäuse nach Anspruch 4, **dadurch gekennzeichnet, dass** drei etwa gleichmäßig über den Umfang der Kanalmündung verteilt angeordnete Befestigungsschrauben (13) für das Halteblech (10) vorgesehen sind.

6. Gehäuse nach Anspruch 4, **dadurch gekennzeichnet, dass** drei etwa gleichmäßig über den Umfang der Kanalmündung verteilt angeordnete Abstützpunkte (13, 24) für das Halteblech (10) vorgesehen sind, von denen zwei (24) gehäusefest sind und einer vom Kopf (17) einer Schraube (13) gebildet wird.

7. Gehäuse nach Anspruch 6, **dadurch gekennzeichnet, dass** Winkel, Quernuten oder Schäfte (26) mit Köpfen (25) die gehäusefesten Stützpunkte (24) bilden.

8. Gehäuse nach einem der Ansprüche 4 bis 7, **dadurch gekennzeichnet, dass** die Durchbrechungen (16) im Halteblech (10) schlitzförmig gestaltet sind.

9. Gehäuse nach Anspruch 8 und einem der Ansprüche 4 bis 7, **dadurch gekennzeichnet, dass** die Schlitze (16) derart gleichgerichtet sind, dass durch eine Bewegung des Haltebleches (10) etwa quer zur Achse (11) der Anschlussgeometrie alle Schäfte (15, 26) der Schrauben (13) bzw. gehäusefesten Abstützpunkte (24) in die Schlitze (16) einbringbar sind.

10. Gehäuse nach einem der vorhergehenden Ansprüche,
**dadurch gekennzeichnet, dass** das Halteblech (10) im Bereich seiner Auflage auf dem Flanschrand abgebogen bzw. abgeknickt ist.

## Claims

1. Casing (2) of an appliance, a pump or the like with a vacuum connection which connects a duct (3) located in the said casing (2) to an external line (6) and which comprises, on the casing, a sealing face (5) surrounding the mouth (4) of the said duct (3) and, on the line, a flange (7) with a corresponding sealing face (8), and also comprises connecting components (10, 13, 24),
**characterised in that**
the sealing face (5) surrounding the mouth (4) of the duct (3), which mouth is on the casing, is located in the region of the surface of the casing; that a sheet-metal holder (10) which rests, when the connection is produced, on that rim of the flange (7) which faces away from the casing (2), serves for the vacuum-tight fastening of the flange (7) of the external line (6) on the sealing face (5); that pressing-on forces, which press the sealing face (8) of the flange (7) against the sealing face (5) in the region of the surface of the casing, are generated with the aid of the sheet-metal holder (10); that the said sheet-metal holder (10) is equipped with openings (16) for the shafts (15, 26) of fastening screws (13) or the like (24), whose heads (17, 25) rest on the sheet-metal holder (10) when the connection is produced, to engage through; and that at least one of the fastening screws (13) serves to generate the pressing-on forces.

2. Casing according to claim 1, **characterised in that** the sealing face (5) on the casing is located in a recess (21) in the surface of the casing.

3. Casing according to claim 1 or 2, **characterised in that** the sealing faces (5, 8) extend approximately perpendicularly to the axis (11) of the connecting geometry.

4. Casing according to claim 1, 2 or 3, **characterised in that** the sheet-metal holder (10) is shaped approximately in the form of a U.

5. Casing according to claim 4, **characterised in that** three fastening screws (13) for the sheet-metal holder (10) are provided, which are disposed so as to be distributed approximately uniformly over the periphery of the mouth of the duct.

6. Casing according to claim 4, **characterised in that** three supporting points (13, 24) for the sheet-metal holder (10) are provided, which are disposed so as to be distributed approximately uniformly over the periphery of the mouth of the duct and of which two (24) are integral with the casing and one is formed by the head (17) of a screw (13).

7. Casing according to claim 6, **characterised in that** the supporting points (24) which are integral with the casing are formed by elbows, transverse grooves or shafts (26) with heads (25).

8. Casing according to one of claims 4 to 7, **characterised in that** the openings (16) in the sheet-metal holder (10) are shaped in the form of slots.

9. Casing according to claim 8 and one of claims 4 to 7, **characterised in that** the slots (16) are directed in an identical manner in such a way that, as a result of a movement of the sheet-metal holder (10) approximately transversely to the axis (11) of the connecting geometry, all the shafts (15, 26) of the screws (13) or of the supporting points (24) which are integral with the casing can be introduced into the slots (16).

10. Casing according to one of the preceding claims, **characterised in that** the sheet-metal holder (10) is deflected or bent in the region in which it rests on the rim of the flange.

## Revendications

1. Boîtier (2) d'un appareil, d'une pompe ou similaire, comportant une liaison à vide qui relie un canal (3) se trouvant dans le boîtier (2) à une conduite extérieure (6) et qui comprend du côté boîtier une surface d'étanchéité (5) entourant l'embouchure (4) du canal (3), qui comprend du côté conduite une bride (7) avec une surface d'étanchéité (8) correspondante ainsi que des composants de liaison (10, 13, 24), **caractérisé en ce que** la surface d'étanchéité (5) entourant l'embouchure (4) du canal (3) se trouve dans la région de la surface de boîtier, **en ce que** pour la fixation étanche au vide de la bride (7) de la conduite extérieure (6) sur la surface d'étanchéité (5) sert une tôle de retenue (10) qui, lorsque la liaison est établie, repose sur le bord de la bride (7) qui est détourné du boîtier (2), **en ce qu'**à l'aide de la tôle de retenue (10) sont engendrées des forces de pressage qui pressent la surface d'étanchéité (8) de la bride (7) contre la surface d'étanchéité (5) dans la région de la surface de boîtier, **en ce que** la tôle de retenue (10) est pourvue de perçages (16) pour la traversée des tiges (15, 26) de vis de fixation (13) ou similaire (24), dont les têtes (17, 25) sont en appui sur la tôle de retenue (10) lorsque la liaison est établie, et **en ce que** l'une au moins des vis de fixation (13) sert à engendrer les forces de pressage.

2. Boîtier selon la revendication 1, **caractérisé en ce que** la surface d'étanchéité (5) côté boîtier se trouve dans un renfoncement (21) dans la surface de boîtier.

3. Boîtier selon l'une ou l'autre des revendications 1 et 2, **caractérisé en ce que** les surfaces d'étanchéité (5, 8) s'étendent approximativement perpendiculairement à l'axe (11) de la géométrie de raccordement.

4. Boîtier selon la revendication 1, 2 ou 3, **caractérisé en ce que** la tôle de retenue (10) est réalisée approximativement en forme de U.

5. Boîtier selon la revendication 4, **caractérisé en ce qu'**il est prévu trois vis de fixation (13) pour la tôle de retenue (13), qui sont agencées réparties de manière approximativement régulière sur la périphérie de l'embouchure du canal.

6. Boîtier selon la revendication 4, **caractérisé en ce qu'**il est prévu trois points d'appui (13, 24) pour la tôle de retenue (13), qui sont agencés répartis de manière approximativement régulière sur la périphérie de l'embouchure du canal, dont deux sont solidaires du boîtier et un est formé par la tête (17) d'une vis (13).

7. Boîtier selon la revendication 6, **caractérisé en ce que** les points d'appui (24) sont formés par des angles, des gorges transversales ou des tiges (26) avec des têtes (25).

8. Boîtier selon l'une quelconque des revendications 4 à 7, **caractérisé en ce que** les perçages (16) dans la tôle de retenue (10) sont réalisés en forme de fentes.

9. Boîtier selon la revendication 8 et l'une quelconque des revendications 4 à 7, **caractérisé en ce que** les fentes (16) sont orientées dans la même direction de sorte que grâce à un mouvement de la tôle de retenue (10) approximativement perpendiculairement à l'axe (11) de la géométrie de raccordement, toutes les tiges (15, 26) des vis (13) et des points d'appui (24) solidaires du boîtier, respectivement, peuvent être introduites dans les fentes (16).

10. Boîtier selon l'une quelconque des revendications précédentes, **caractérisé en ce que** la tôle de retenue (10) est cintrée ou pliée dans la région de son appui sur le bord de bride.
